# NOUVEAU FASCICULE DE BREVET EUROPEEN

(11) **EP 2 685 929 B2**
(45) Date de publication et mention de la décision concernant l'opposition: **16.06.2021**
(45) Mention de la délivrance du brevet: 01.04.2015
(21) Numéro de dépôt: 12714740.3
(22) Date de dépôt: 15.03.2012
(51) Int. Cl.: A61C 8/00

(54) **IMPLANT DENTAIRE**
ZAHNIMPLANTAT
DENTAL IMPLANT

(30) Priorité: 15.03.2011 FR 1100769
(43) Date de publication de la demande: 22.01.2014
(73) Titulaire: BIOTECH DENTAL, 13300 Salon-de-Provence (FR)
(72) Inventeur: BREYSSE, Pascal, F-69210 St Germain su l'Arbresle (FR)
(74) Mandataire: Weber, Etienne Nicolas
(86) Numéro de dépôt international: PCT/FR2012/000093
(87) Numéro de publication internationale: WO 2012/123654

(56) Documents cités:
- EP-A1- 1 728 486
- WO-A1-2009/009911
- DE-T-602004 008 733
- US-A- 5 823 776
- US-A1- 2005 287 497
- US-A1- 2010 055 643

## Description

La présente invention concerne un implant dentaire.

Elle entre dans le domaine de l'implantologie orale.

Les implants dentaires destinés à permettre l'implantation d'une prothèse (fausse-dent) dans les os maxillaires comprennent le plus souvent deux éléments essentiels :
- d'une part, un implant réalisé sous forme de vis munie d'un alésage borgne, appelé à être fixé, par vissage, dans lesdits os de la mâchoire et,
- d'autre part, un élément prothétique ou pilier servant de support à la prothèse proprement dite ou fausse-dent.

Des moyens de connexion permettent de solidariser provisoirement le pilier supportant la prothèse et l'implant lors de l'essayage de celle-ci en bouche, ou définitivement, lors de l'intervention finale de pose de la prothèse dans la cavité buccale.

Selon une méthode de connectique connue largement utilisée, les moyens de connexion associent une liaison par emboîtement de type Cône-Morse et un système d'indexation anti-rotatoire comprenant un relief d'indexation et une empreinte homothétique complémentaire dont sont respectivement pourvues les extrémités emboîtables des éléments constitutifs des implants (voir par exemple : FR-2.922.752, US-2010/0248181). Une vis assure la solidarisation des deux éléments constitutifs en direction axiale.

Les éléments constitutifs mâle et femelle des systèmes d'indexation décrits dans les deux documents susmentionnés comportent, respectivement, un nombre égal de reliefs d'indexation et de rainures équidistants.

Selon le document FR-2.922.752, le système anti-rotatoire comprend un relief d'indexation constitué par un plot de section triangulaire équilatéral dont est munie l'extrémité apicale de l'embase d'ancrage et par une empreinte homothétique complémentaire ménagée dans la base du pilier. Ce système a pour inconvénient de ne pas solutionner le problème posé par la nécessité d'obtenir la possibilité d'un positionnement aussi précis que possible de la prothèse dans la cavité buccale.

En effet, ce dispositif n'offre que trois possibilités d'orientation de la prothèse, distantes de 120°, autour de l'axe d'implantation de celle-ci, ce qui est très insuffisant pour obtenir une bonne orientation de la prothèse aussi bien sur le plan de sa fonction que sur le plan de l'esthétique.

Ce problème n'est pas davantage résolu par l'implant dentaire décrit dans le document US-2010/0248181. En effet, selon ce document, le système d'indexation anti-rotatoire comprend, d'une part, un relief d'indexation à six dents constitué par l'extrémité du pied du pilier et, d'autre part, une empreinte homothétique ménagée dans la partie supérieure de l'implant. Ce dispositif offre plus de possibilités d'orientation de la prothèse autour de son axe d'ancrage (plus précisément : six positions décalées de 60° autour de l'axe d'implantation de la prothèse). Cependant, ce système d'indexation est difficile à réaliser en raison de la taille très réduite de ses parties coopérantes, tandis que la mise en place de la prothèse peut s'avérer difficile, notamment lorsqu'il s'agit de l'installer sur une partie difficilement accessible de la cavité buccale (cas des molaires par exemple).

Un autre implant dentaire offre également six positions décalées de 60° autour de l'axe d'implantation de la prothèse. Cet implant est décrit dans le document US-2010/0055643. Selon ce document, le système d'indexation anti-rotatoire comprend, d'une part, un relief d'indexation à trois dents portées par le pilier et, d'autre part, une empreinte à six fentes, réparties uniformément autour de l'axe de l'implant dentaire, ménagée dans la partie supérieure de l'implant. Cependant, cet implant présente des inconvénients majeurs, notamment les efforts ne sont transmis que par la couronne supérieure comprenant les fentes. Cela induit de micromouvements de l'implant, notamment pendant la mastication. Ces micromouvements autorisent l'infiltration de fluides biologiques et de bactéries qui peuvent proliférer dans l'implant.

Un objectif de la présente invention est de mettre à la disposition des praticiens, un implant dentaire permettant de remédier aux inconvénients précédemment soulignés.

L'invention propose un implant dentaire tel que défini par la revendication 1. Des modes de réalisation particuliers sont indiqués dans les revendications subséquentes.

Selon un mode d'exécution possible, l'élément mâle du système d'indexation comporte deux branches radiales angulairement espacées de 180° tandis que l'élément femelle du dispositif d'indexation comporte quatre lobes espacés de 90°, ou six lobes espacés de 60°.

Suivant un autre mode de réalisation préféré et avantageux, l'élément mâle du système d'indexation comporte trois branches radiales angulairement espacées de 120°, et l'empreinte constituant l'élément femelle de ce dispositif d'indexation comporte six encoches ou lobes espacées de 60°.

L'implant est ainsi muni d'une connexion femelle hexa-lobulaire, tandis que le pilier est pourvu d'une connexion mâle à trois pans.

Suivant un autre mode de réalisation préféré et avantageux, l'élément mâle du système d'indexation comporte trois branches radiales angulairement espacées de 120°, et l'empreinte constituant l'élément femelle de ce dispositif d'indexation comporte six encoches ou lobes espacées de 60°.

L'implant est ainsi muni d'une connexion femelle hexa-lobulaire, tandis que le pilier est pourvu d'une connexion mâle à trois pans.

De la sorte, lors de l'embronchement des parties mâle et femelle de ce dispositif de connexion, les trois branches ou pans de la partie mâle peuvent être enfichées, sélectivement, dans trois encoches espacées de 120° de la partie femelle.

On peut donc obtenir six positions du pilier par rapport à l'implant et, par conséquent, six possibilités d'orientation de la dent prothétique autour de son axe d'implantation, ce qui permet un bon positionnement de celle-ci aussi bien par rapport à la fonction qu'elle est appelée à remplir que sur le plan de l'esthétique de la dentition.

Selon un mode de réalisation avantageux, l'extrémité inférieure des branches d'indexation comporte un congé d'entrée.

L'invention procure plusieurs autres résultats intéressants :
- elle simplifie la mise en place de la dent prothétique ;
- elle permet de réduire l'importance des surfaces du dispositif d'indexation se trouvant en contact lors de cette mise en contact de sorte que le frottement se trouve limité. Selon l'invention, le pilier dispose d'une indexation à trois sommets positionnés à 120° qui conserve le repositionnement à 60° et confère une facilité de mise en place de part la réduction des zones de frottement et risques d'interférence dus au rayon de congés que présentent les extrémités inférieures des branches du système d'indexation. La mise en place en bouche aisée rend l'intervention du praticien intuitive, quelle que soit la localisation du site implantaire. Le jeu angulaire est également considérablement réduit lors de la fabrication, accentuant la précision du dispositif ;
- la combinaison d'une connectique disposant, au niveau implantaire, d'une empreinte hexa-lobulaire spécifique et d'une connexion de type Cône-Morse sur une hauteur importante, garantit l'herméticité totale entre la prothèse et l'implant ;
- grâce à sa géométrie innovante, cette connectique assure une transmission de couple optimale et fiable lors de la mise en place de l'implant. Ainsi, tous risques de matages et autres déformations dus à la transmission de couple sont évités. Pour la prothèse, l'herméticité est assurée par la géométrie de type Cône-Morse. Ce choix technologique permet donc l'utilisation de deux philosophies distinctes n'altérant pas les performances de bridage :
   - dispositif rotationnel ;
   - dispositif anti-rotationnel.

L'invention concerne un système d'interface implant dentaire - pilier prothétique permettant un repositionnement aisé, une indexation précise et une herméticité totale. L'optimisation dimensionnelle permet :
- de disposer d'une empreinte commune à tous les diamètres d'implants : les éléments prothétiques ne sont plus à choisir en fonction des diamètres d'implants ;
- une facilité de fabrication résultant du fait que l'élément mâle de la connexion comporte seulement trois branches ou pans.

Les buts, caractéristiques et avantages ci-dessus, et d'autres encore, ressortiront mieux de la description qui suit et des dessins annexés dans lesquels :

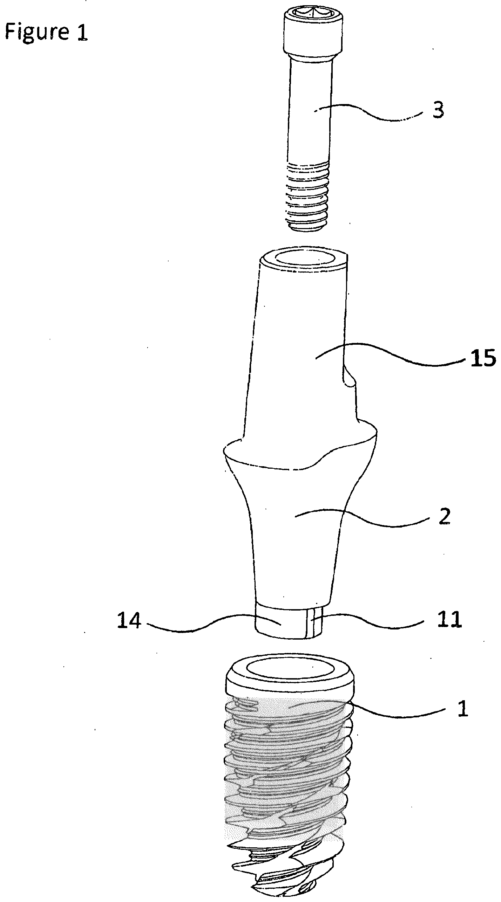

La figure 1 est une vue en perspective éclatée de l'implant dentaire selon l'invention.
La figure 2 est une vue en coupe axiale éclatée de cet implant dentaire.

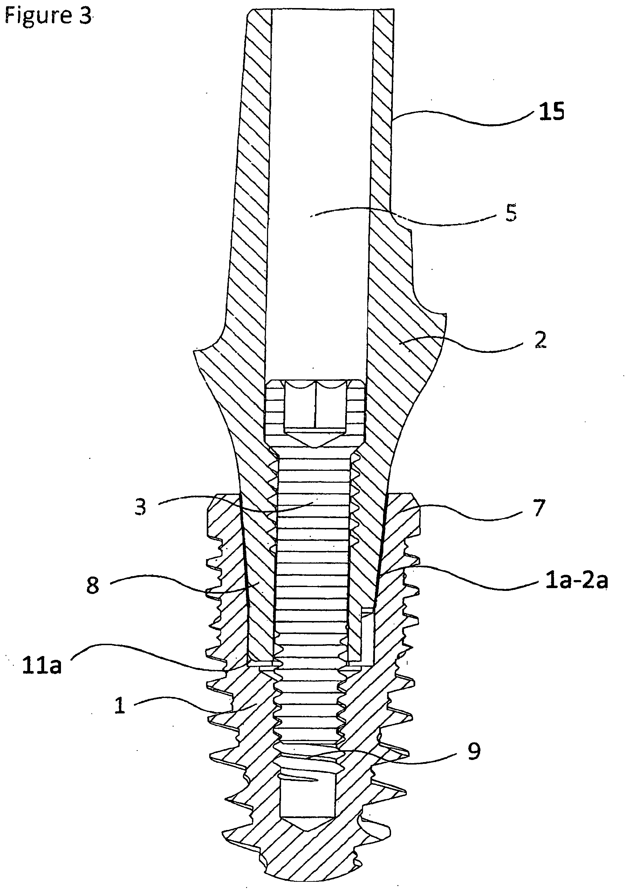

La figure 3 est une vue en coupe axiale montrant les éléments constitutifs de l'implant dentaire en position d'assemblage.

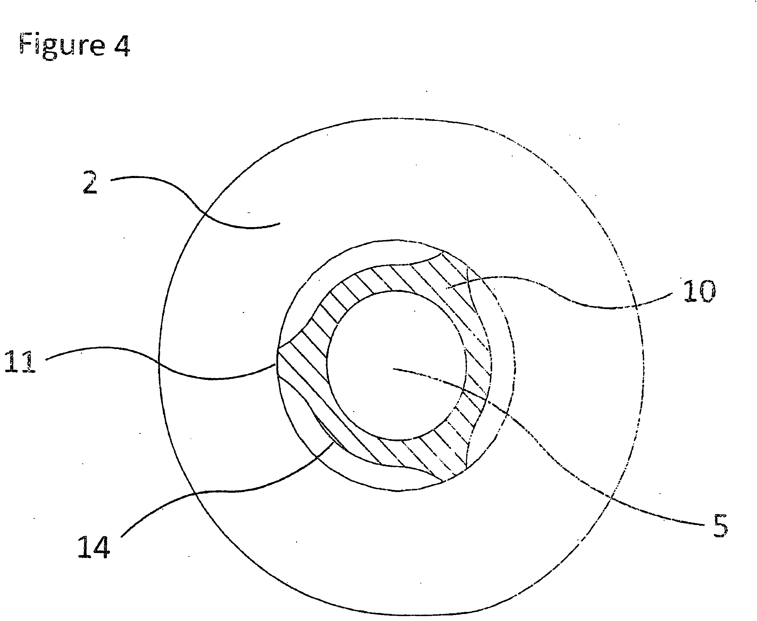

La figure 4 est une vue en coupe selon la ligne 4-4 de la figure 2.

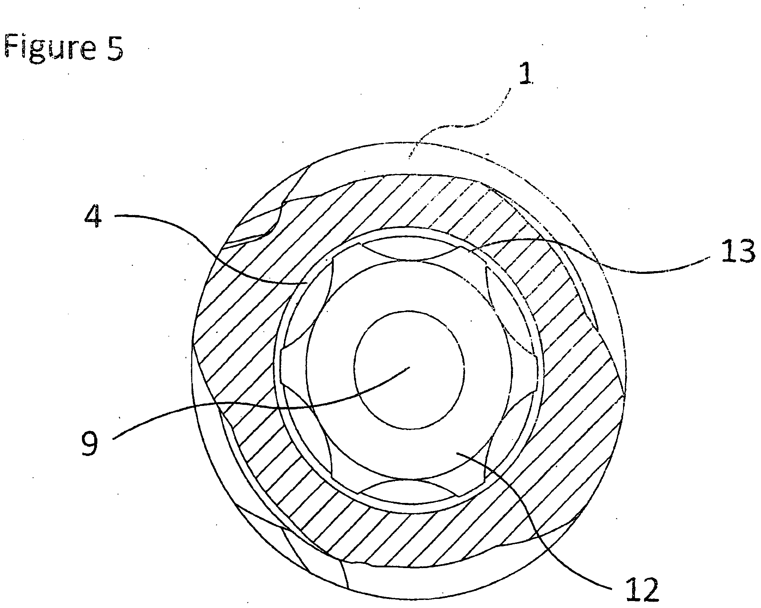

La figure 5 est une vue en coupe selon la ligne 5-5 de la figure 2.
Les figures 6 et 7 sont des vues en coupe transversale illustrant deux positions d'embronchement de l'élément de connexion mâle à trois pans du pilier prothétique dans l'empreinte femelle hexa-lobulaire du dispositif de connexion selon l'invention.

On se réfère auxdits dessins pour décrire un exemple de réalisation intéressant, bien que non limitatif, de l'implant dentaire selon l'invention.

Dans la description qui suit :
- l'expression « implant dentaire » désigne l'ensemble constitué par les deux parties constitutives essentielles du dispositif prothétique ;
- le terme « embase d'ancrage » désigne l'implant proprement dit ;
- le terme « pilier » désigne l'élément prothétique ou faux moignon destiné à supporter la prothèse ou fausse-dent ;
- le terme « distale » désigne l'extrémité des éléments constitutifs de l'implant appelée à se trouver la plus proche du fond du pertuis pratiqué dans l'os, pour la réception de l'élément racinaire de l'implant dentaire, tandis que le terme « proximale » désigne l'extrémité la plus éloignée de ce fond.

L'implant dentaire selon l'invention comprend, de manière connue en soi :
- une embase d'implantation 1 ou implant proprement dit ;
- un pilier 2 ou faux moignon destiné à supporter la dent prothétique ou fausse dent (non représentée), ledit pilier 2 étant destiné à être assemblé hermétiquement à ladite embase ;
- une vis axiale 3 permettant de solidariser l'embase 1 et le pilier 2.

L'embase 1 constituant l'élément racinaire de l'implant est appelée à être ancrée dans l'os maxillaire ou dans l'os mandibulaire d'un patient.

Elle adopte la forme d'une vis conique ou cylindro-conique comportant un alésage borgne 4 débouchant à l'extrémité proximale de l'embase 1. Sa surface externe peut être rendue rugueuse par tout procédé convenable connu en soi. Elle est réalisée dans un biomatériau, préférentiellement en titane ou en zircone ou en alliages de titane ou de zircone, ces deux matériaux ayant pour avantages de présenter de grandes qualités de résistance mécanique, d'inaltérabilité et une très bonne biocompatibilité avec les tissus osseux.

Le pilier 2 constituant la superstructure de l'implant, est constitué par un élément allongé muni d'un alésage axial 5 le traversant d'une extrémité à l'autre.

Le pilier 2 est également réalisé en biomatériau, de préférence en titane ou en zircone, ou en alliages de titane ou de zircone.

La partie proximale 7 de l'élément racinaire 1 et la partie distale 8 de la superstructure 2 sont conformées complémentairement pour permettre une connexion par emboîtement de ces parties, de manière connue en soi.

La permanence de cette connexion est assurée par la vis 3 logée dans l'alésage axial 5 du pilier 2 et se vissant dans un taraudage 9 ménagé dans le fond de l'alésage borgne 4 de l'embase 1. D'autre part, les moyens complémentaires de connexion comprennent encore un système d'indexation dont les éléments constitutifs peuvent être assemblés par embronchement ou enfichage sélectif.

L'élément mâle 10 de ce système d'indexation, constitué par l'extrémité distale ou base de l'élément prothétique ou pilier 2, comporte au moins deux branches radiales 11 angulairement espacées de manière égale, et, d'autre part, l'empreinte constituant l'élément femelle de ce système d'indexation ménagée dans l'alésage 4 de l'embase d'ancrage 1 et constituant l'élément femelle de ce dispositif d'indexation, comporte un nombre de lobes ou encoches 13 disposées à égale distance les unes des autres, ce nombre étant constitué par un multiple du nombre de reliefs d'indexation 11 dudit élément mâle 2.

Selon un mode d'exécution possible (non représenté), l'élément mâle du système d'indexation comporte deux branches radiales angulairement espacées de 180°, tandis que l'élément femelle du système d'indexation est muni de quatre lobes espacés de 90°, ou six lobes espacés de 60°.

Suivant le mode de réalisation préféré et avantageux illustré, l'élément mâle 10 du système d'indexation comporte trois branches radiales 11 espacées de 120°, et l'empreinte 12 constituant l'élément femelle de ce dispositif d'indexation est munie de six encoches ou lobes espacées de 60°.

Les branches 11 et les encoches 13 de ce dispositif d'indexation sont conformées de sorte que les premières puissent être engagées, de manière sélective, sans jeu excessif, dans trois encoches ou lobes espacées de 120° de l'empreinte.

L'empreinte 12 constituant l'élément femelle du système d'indexation est obtenue, par exemple, de manière connue en soi, par brochage.

L'extrémité distale ou base du pilier 2 est constituée par un tenon annulaire 14 de diamètre inférieur à celui de la partie restante dudit pilier à laquelle il est rattaché. Les branches d'indexation 11 sont disposées de manière équidistante à la périphérie de ce tenon annulaire et s'étendent, parallèlement à l'axe dudit tenon annulaire et sur toute la hauteur de ce dernier. Les branches radiales 11 présentent un profil général triangulaire à sommet arrondi.

L'extrémité des branches d'indexation 11 est munie d'un congé d'entrée 11a. Cette caractéristique permet un emboitement intuitif, par le praticien, des deux parties constitutives de l'implant, à savoir le pilier 2 et l'embase d'implantation 1.

Selon une autre disposition caractéristique de l'invention, le dispositif d'indexation décrit précédemment est combiné avec un système de connexion suivant lequel les parties d'extrémité coopérantes du pilier 2 et de l'embase d'implantation 1 sont agencées pour permettre leur liaison par emboîtement au moyen d'un système de connexion de type Cône-Morse. Suivant ce système de connexion connu en soi, les parties d'emboîtement du pilier 2 et de l'embase d'implantation 1 destinées à se trouver en contact sont dotées de surfaces coniques complémentaires, respectivement 2a et 1 a. Cette conicité présente par exemple une angulation de l'ordre de 10° et s'étend sur une hauteur importante, par exemple de l'ordre de 2,5 mm. Ainsi, le bridage entre l'implant dentaire 1 et la phase prothétique 2 se porte uniquement sur la surface des deux cônes morses 1a, 2a, assurant une liaison entre l'embase d'implantation 1 et le pilier 2 du type centrage long. La correspondance entre les deux cônes morses 1a et 2a se fait à la hauteur d'un plan de jauge défini.

Le choix d'une connexion de type Cône-Morse permet d'obtenir une herméticité totale entre le pilier 2 et l'embase d'implantation 1, de façon connue en soi.

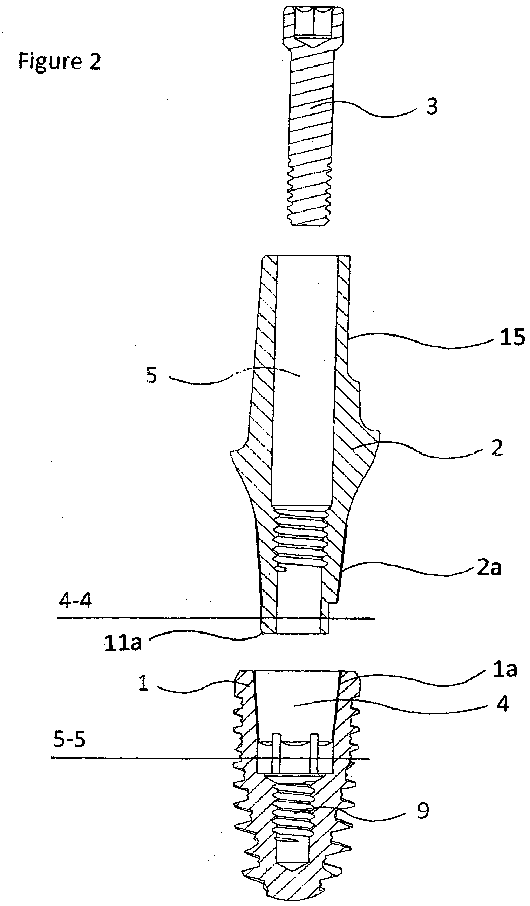

Comme illustré à la figure 2, l'embase d'implantation 1 présente intérieurement, de bas en haut, le taraudage 9, suivi de l'empreinte hexalobulaire 12, et enfin la surface femelle 1a de type Cône-Morse dans sa partie apicale.

Toujours selon la figure 2, le pilier 2 comporte extérieurement, et de bas en haut, la surface mâle 2a de type Cône-Morse, et la surface 15 de réception de la dent prothétique.

Dans ce cas, la combinaison de ce type de connexion avec le système d'indexation original précédemment décrit participe à la facilité de mise en place et de bon positionnement du support prothétique 2 dans l'embase 1, par le chirurgien-dentiste.

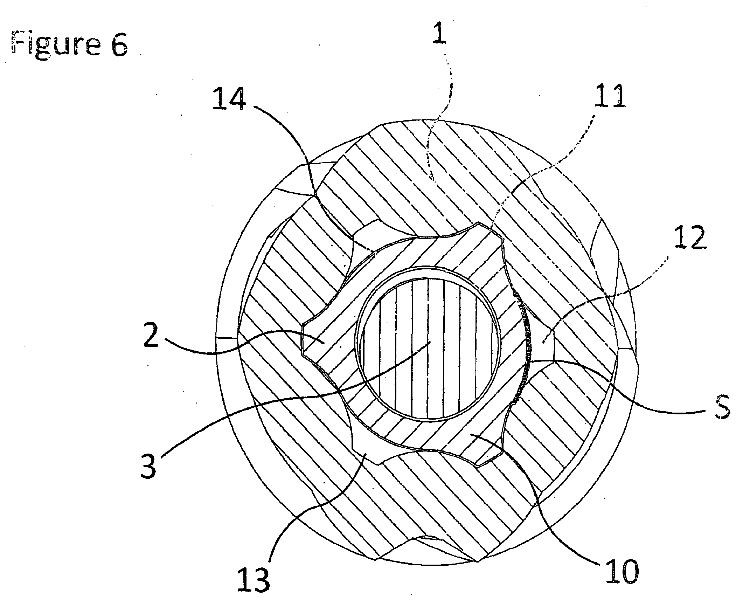

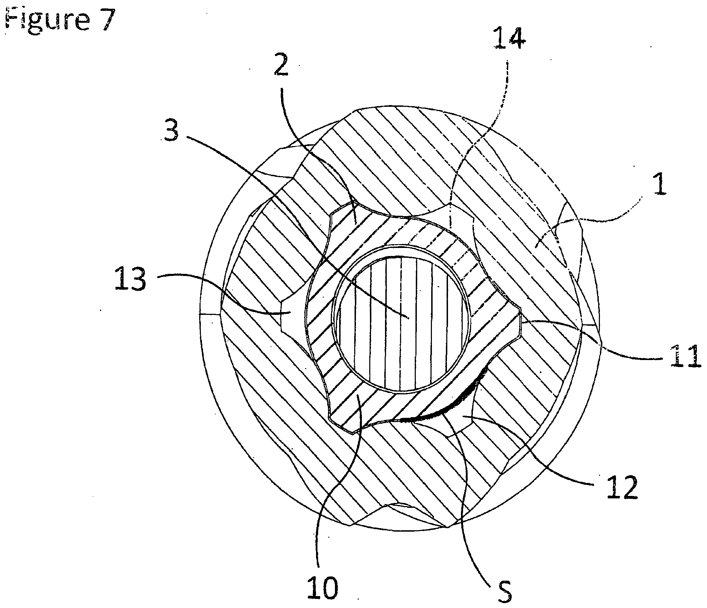

Les figures 6 et 7 illustrent deux positions du pilier 2 décalées de 60° par rapport à l'embase d'implantation 1. Sur ces figures, une surface de référence S est représentée en trait fort et l'on peut voir que sur la figure 7, cette surface S se trouve décalée de 60°, dans le sens dextrorsum, par rapport à l'orientation représentée sur la figure 6.

## Revendications

1. Implant dentaire du genre comprenant une embase d'ancrage (1) affectant la forme d'une vis pourvue d'un alésage borgne et un pilier (2) destiné à supporter une dent prothétique, ladite embase d'ancrage (1) et ledit pilier étant pourvus de moyens complémentaires de connexion comprenant un système d'indexation (10-12) dont les parties constitutives peuvent être assemblées par embronchement ou enfichage, d'une part, l'élément mâle (10) dudit système d'indexation, constitué par l'extrémité distale ou base de l'élément prothétique ou pilier (2) comporte au moins deux branches radiales (11) angulairement espacées de manière égale et, d'autre part, l'empreinte (12) constituant l'élément femelle de ce système d'indexation ménagée dans l'alésage (4) de l'embase d'ancrage (1) est munie d'un nombre de lobes ou encoches (13) disposées à égale distance les unes des autres, ce nombre étant constitué par un multiple du nombre de branches radiales (11) dudit élément mâle (2), **caractérisé par** la combinaison du dispositif d'indexation (10-12) avec un système de connexion suivant lequel les parties d'extrémités coopérantes du pilier (2) et de l'embase d'implantation (1) sont agencées pour permettre une liaison par emboîtement dudit pilier (2) et de ladite embase d'implantation (1) au moyen d'un système de connexion de type Cône-Morse, et dans lequel l'extrémité distale ou base du pilier (2) est constituée par un tenon annulaire (14) de diamètre inférieur à celui de la partie dudit pilier à laquelle il est rattaché, les branches ou reliefs d'indexation (11) étant disposées, de manière équidistante, à la périphérie de ce tenon annulaire et s'étendant, parallèlement à l'axe dudit tenon annulaire et sur toute la hauteur de ce dernier.

2. Implant dentaire selon la revendication 1, **caractérisé en ce que** l'élément mâle (10) du système d'indexation (10-12) comporte deux branches radiales angulairement espacées de 180° tandis que l'élément femelle (12) dudit système d'indexation est muni de quatre lobes espacés de 90° ou de six lobes espacés de 60°.

3. Implant dentaire suivant la revendication 1, **caractérisé en ce que** l'élément mâle (10) du système d'indexation (10-12) comporte trois branches radiales (11) espacées de 120°, et l'empreinte (12) constituant l'élément femelle de ce système d'indexation est munie de six encoches ou lobes espacées de 60°, dans trois desquelles peuvent être engagées, sélectivement, lesdites branches radiales (11).

4. Implant dentaire selon l'une quelconque des revendications 1 à 3, **caractérisé en ce que** les surfaces coniques complémentaires du pilier (2) et de l'embase d'implantation (1) présentent une conicité de l'ordre de 10°.

5. Implant dentaire selon l'une quelconque des revendications 1 à 4, **caractérisé en ce que** les branches radiales (11) présentent un profil général triangulaire.

6. Implant dentaire selon l'une quelconque des revendications 1 à 5, **caractérisé en ce que** l'extrémité inférieure des branches d'indexation (11) comporte un congé d'entrée (11a).

## Patentansprüche

1. Zahnimplantat von dem Typ, der eine Verankerungsbasis (1), die die Form einer mit einer Sacklochbohrung versehenen Schraube annimmt, und einen Pfeiler (2) umfasst, der dazu bestimmt ist, einen Prothesenzahn zu tragen, wobei die Verankerungsbasis (1) und der Pfeiler mit komplementären Verbindungsmitteln versehen sind, die ein Indexierungssystem (10-12) umfassen, dessen Bestandteile durch Ineinandersetzen oder Ineinanderstecken zusammengefügt werden können, einerseits das männliche Element (10) des Indexierungssystems, das aus dem distalen Ende oder der Basis des Prothesenelements oder dem Pfeiler (2) besteht, mindestens zwei radiale Arme (11) umfasst, die winkelmäßig gleich beabstandet sind, und andererseits die das weibliche Element dieses Indexierungssystems bildende Vertiefung (12), die in der Bohrung (4) der Verankerungsbasis (1) ausgestaltet ist, mit einer Anzahl von Ausbuchtungen oder Kerben (13) ausgestattet ist, die in gleichem Abstand zueinander angeordnet sind, wobei diese Anzahl aus einem Vielfachen der Anzahl radialer Arme (11) des männlichen Elements (2) besteht, **gekennzeichnet durch** die Kombination der Indexierungsvorrichtung (10-12) mit einem Verbindungssystem, demgemäß die Teile von zusammenwirkenden Enden des Pfeilers (2) und der Implantationsbasis (1) so eingerichtet sind, dass sie eine Verbindung durch Ineinanderpassen des Pfeilers (2) und der Implantationsbasis (1) mittels eines Verbindungssystems vom Typ Morsekegel ermöglichen, und wobei das distale Ende oder die Basis des Pfeilers (2) aus einem ringförmigen Zapfen (14) von kleinerem Durchmesser als jenem des Teils des Pfeilers besteht, an dem er festgemacht wird, wobei die Indexierungsarme oder -erhebungen (11) gleichmäßig beabstandet am Umfang dieses ringförmigen Zapfens angeordnet sind und sich parallel zur Achse des ringförmigen Zapfens und auf der gesamten Höhe dieses letzteren erstrecken.

2. Zahnimplantat nach Anspruch 1, **dadurch gekennzeichnet, dass** das männliche Element (10) des Indexierungssystems (10-12) zwei radiale Arme umfasst, die winkelmäßig um 180° beabstandet sind, während das weibliche Element (12) des Indexierungssystems mit vier um 90° beabstandeten Ausbuchtungen oder mit sechs um 60° beabstandeten Ausbuchtungen ausgestattet ist.

3. Zahnimplantat nach Anspruch 1, **dadurch gekennzeichnet, dass** das männliche Element (10) des Indexierungssystems (10-12) drei radiale Arme (11) umfasst, die um 120° beabstandet sind, und die Vertiefung (12), die das weibliche Element dieses Indexierungssystems bildet, mit sechs um 60° beabstandeten Kerben oder Ausbuchtungen ausgestattet ist, in drei von denen die radialen Arme (11) selektiv in Eingriff gebracht werden können.

4. Zahnimplantat nach einem der Ansprüche 1 bis 3, **dadurch gekennzeichnet, dass** die komplementären Kegelflächen des Pfeilers (2) und der Implantationsbasis (1) eine Kegelneigung in der Größenordnung von 10° aufweisen.

5. Zahnimplantat nach einem der Ansprüche 1 bis 4, **dadurch gekennzeichnet, dass** die radialen Arme (11) ein allgemein dreieckiges Profil aufweisen.

6. Zahnimplantat nach einem der Ansprüche 1 bis 5, **dadurch gekennzeichnet, dass** das untere Ende der Indexierungsarme (11) ein Eintrittsspiel (11a) umfasst.

## Claims

1. Dental implant of the type comprising an anchoring base (1) having the form of a screw provided with a blind bore and a stud (2) intended to support a prosthetic tooth, said anchoring base (1) and said stud being provided with complementary connection means comprising a indexing system (10-12) the constituent parts of which can be assembled by connecting together or plugging in, firstly, the male element (10) of said indexing system, formed by the distal end or base of the prosthetic element or stud (2), includes at least two radial branches (11) angularly spaced apart equally, and secondly the indentation (12) constituting the female element of this indexing system provided in the bore (4) of the anchoring base (1) is provided with a number of lobes or notches (13) disposed at equal distances from each other, this number consisting of a multiple of the number of radial branches (11) of said male element (2), **characterised by** the combining of the indexing device (10-12) with a connection system according to which the cooperating end parts of the stud (2) and of the implantation base (1) are arranged to allow a connection by fitting together of said stud (2) and said implantation base (1) by means of a connection of the Cone-Morse type, and wherein the distal end or base of the stud (2) is formed by an annular tenon (14) with a diameter less than that of the part of said stud to which it is attached, the locating branches or reliefs (11) being disposed, equidistantly, at the periphery of this annular tenon and extending parallel to the axis of said annular tenon and over the entire height thereof.

2. Dental implant according to claim 1, **characterised in that** the male element (10) of the indexing system (10-12) includes two radial branches angularly spaced apart by 180° while the female element (12) of said indexing system is provided with four lobes spaced apart by 90° or six lobes spaced apart by 60°.

3. Dental implant according to claim 1, **characterised in that** the male element (10) of the indexing system (10-12) includes three radial branches (11) spaced apart by 120°, and the indentation (12) constituting the female element of this indexing system is provided with six notches or lobes spaced apart by 60°, in three of which said radial branches (11) can be selectively engaged.

4. Dental implant according to any one of claims 1 to 3, **characterised in that** the complementary conical surfaces of the stud (2) and of the implantation base (11) have a conicity of around 10°.

5. Dental implant according to any one of claims 1 to 4, **characterised in that** the radial branches (11) have a triangular overall profile.

6. Dental implant according to any one of claims 1 to 5, **characterised in that** the bottom end of the indexing branches (11) includes an entry fillet (11a).
